# FASCICULE DE BREVET EUROPEEN

(11) **EP 0 504 275 B1**
(45) Date de publication et mention de la délivrance du brevet: **02.08.1995**
(21) Numéro de dépôt: 91901298.9
(22) Date de dépôt: 07.12.1990
(51) Int. Cl.: H04N 7/20

(54) **PROCEDE ET DISPOSITIF DE TRANSMISSION DE SIGNAUX VIDEO EN MILIEU CONFINE**
VERFAHREN UND VORRICHTUNG ZUR ÜBERTRAGUNG EINES VIDEOSIGNALS IN ABGESCHLOSSENER UMGEBUNG
PROCESS AND DEVICE FOR TRANSMITTING VIDEO SIGNALS IN A CONFINED MEDIUM

(30) Priorité: 08.12.1989 FR 8916304
(43) Date de publication de la demande: 23.09.1992
(73) Titulaire: L'INSTITUT NATIONAL DE L'ENVIRONNEMENT INDUSTRIEL ET DES RISQUES, F-60550 VERNEUIL-EN-HALATTE (FR)
(72) Inventeur: CHARPENTIER, Dominique, F-60160 Montataire (FR); DEGAUQUE, Pierre, F-59130 Lambersart (FR); DEGARDIN, Daniel, F-59270 Flètre (FR); BAUDET, Jacques, F-59650 Villeneuve-d'Ascq (FR)
(74) Mandataire: Rinuy, Santarelli
(86) Numéro de dépôt international: FR9000893
(87) Numéro de publication internationale: WO9109502

(56) Documents cités:
- DE-A- 2 626 925
- Siemens Review, vol. XLI, 1974, "Communications Engineering", H. Panschar etal.: "Protection switching, diversity operation, branching and distribution in radio relay systems", pages 180-184
- Funkschau, vol. 51, no. 3, février 1979, "12-GHz-Fernsehen in dicht bebauten Gebieten", pages 72-74
- Patent Abstracts of Japan, vol. 8, no. 25 (E-225)(1462), 2 février 1984; & JP-A-58186271

## Description

L'invention concerne la transmission de signaux vidéo dans les milieux confinés, tels que des tunnels et des galeries de mines.

Une telle transmission vidéo est par exemple utilisée dans les systèmes de télésurveillance de l'environnement ou d'un mobile qui se déplace dans un environnement perturbé et mal défini, dans le but de visionner et de guider un mobile ou de le commander ; il peut s'agir notamment de la transmission d'informations et de la télécommande d'une machine dans un tunnel minier, un tunnel d'égoût ou plus généralement un tunnel dont les dimensions sont de l'ordre de 1 à 10 mètre(s). On appréciera qu'il s'agit ici d'une transmission à haut débit, de type analogique.

Jusqu'à présent, la transmission en tunnel de tels signaux vidéo, pour des communications à grande bande passante entre le mobile et un équipement fixe (au moins fixe temporairement) du tunnel, a été établie à l'aide de structures rayonnantes ; il s'est agi par exemple de câbles coaxiaux fonctionnant dans la bande de fréquence 200-900 Mhz ou de guides d'ondes hyperfréquence rayonnant pour des fréquences supérieures à 1 Ghz. On a obtenu ainsi une transmission continue entre un émetteur mobile se déplaçant au voisinage du guide, et un récepteur situé à l'extrémité du guide d'ondes. Un tel système de communication est bidirectionnel puisque le guide d'ondes permet aussi une transmission depuis l'équipement fixe portant le récepteur jusqu'à l'équipement mobile portant l'émetteur. Ce principe est notamment exposé dans "Colloquium on Propagation in Confined Spaces and Tunnels, IEE Group E11, March 1986, Digest 1986/30.

Ces systèmes connus ont toutefois l'inconvénient d'exiger que l'équipement mobile reste à proximité immédiate du guide d'ondes (moins d'un mètre environ) si l'on veut tirer profit de l'homogénéité du champ. En outre, et surtout, ces systèmes ont l'inconvénient majeur de nécessiter la pose préalable de structures rayonnantes qui constituent une infrastructure lourde. De ce fait, le système de transmission est figé et est dépourvu de toute souplesse d'adaptation.

L'invention vise à pallier ces inconvénients grâce à la mise au point d'une transmission vidéo par faisceau hertzien établissant une communication permanente avec un équipement mobile ayant une position quelconque dans un tunnel, cette communication restant en permanence de bonne qualité malgré les fluctuations du signal reçu résultant des nombreuses réflexions susceptibles d'intervenir sur les parois du tunnel et la présence le plus souvent d'obstacles métalliques entre l'émetteur et le récepteur, ainsi que les atténuations provenant des coudes ou bifurcations existant dans le tunnel.

Il a par ailleurs été proposé (voir le document précité) d'utiliser des tunnels comme des guides, mais les performances sont apparues médiocres en cas de présence d'obstacles ou de coudes. Il semblait falloir des répéteurs.

On connaît par ailleurs, d'après le document DE-A-2 626 925, un dispositif pour la compensation des fluctuations de propagation dans un système de communications utilisant une seule antenne tout en aboutissant à des performances similaires à celles d'un système à deux antennes utilisant le principe de la diversité angulaire. Toutefois, la mise en oeuvre de ce principe ne suffit pas nécessairement pour garantir une bonne transmission dans un milieu confiné tel qu'un tunnel.

L'invention a pour objet de pallier ces insuffisances.

Elle propose à cet effet un procédé pour la transmission en milieu confiné, entre des zones d'émission ou de réception mobiles ou fixes, d'un signal vidéo formé d'une succession de signaux de ligne d'image vidéo commençant par un signal de synchronisation de format connu, et de périodicité connue correspondant à une fréquence connue de synchronisation de ligne, caractérisé en ce qu'en la zone d'émission on module en fréquence avec ce signal vidéo un signal porteur de fréquence comprise dans la gamme des hyperfréquences, on émet par faisceau hertzien ce signal porteur modulé vers la zone de réception, on capte en cette zone de réception deux signaux reçus selon deux axes privilégiés décalés angulairement, on démodule en fréquence chacun de ces signaux reçus selon deux voies identiques de traitement, on commence par appliquer à un équipement de formation d'image le signal reçu démodulé sortant de l'une prédéterminée des deux voies dite initiale tant qu'on détecte dans ce signal reçu démodulé sortant de cette voie l'existence d'un signal périodique de fréquence égale à la fréquence de synchronisation de ligne vidéo, puis on change de voie lorsque ce signal périodique disparaît dans une voie mais est détecté sur l'autre voie, et ainsi de suite.

Ainsi la caractéristique essentielle de l'invention consiste à réaliser une discrimination rapide de l'image consistant à tester ligne par ligne, ou un nombre déterminé de lignes, ou trame par trame, l'existence du signal de synchronisation. Cela permet une nette amélioration de l'image reconstituée à partir des signaux reçus dans la zone de réception ; de plus, même en cas de fluctuations importantes, étant donné le temps de réponse très court (temps de réponse d'une ligne pour commuter d'une voie à l'autre), on ne perd jamais qu'un nombre limité de lignes, ce qui peut en pratique ne même pas être perceptible. Cela est bien meilleur qu'une discrimination fondée sur la comparaison des amplitudes de signaux selon les deux voies.

Cette faible sensibilité aux fluctuations est encore améliorée du fait du décalage angulaire entre les axes suivant lesquels on capte les signaux pour les deux voies de traitement.

Selon des dispositions préférées de ce procédé :
- lorsqu'à un instant donné aucun signal périodique de fréquence égale à la fréquence de synchronisation ligne vidéo n'est détecté, ni dans le signal appliqué à l'équipement de formation d'image, ni dans l'autre signal, on continue à appliquer ce même signal appliqué jusqu'à cet instant,
- lorsqu'à un instant donné au moins un signal périodique de fréquence égale à la fréquence de synchronisation est détecté dans un des signaux reçus démodulés, on applique à l'équipement de formation d'image la voie ayant la meilleure réception,
- la commutation sur la meilleure voie est commandée à l'instant de la réception en la zone de détection du signal périodique de fréquence de synchronisation de la première ligne suivante ou de synchronisation de la première trame suivante.
- en variante, lorsqu'à un instant donné aucun signal périodique de fréquence égale à la fréquence de synchronisation n'est détecté dans aucun des signaux reçus démodulés, on applique à l'équipement de formation d'images le signal sortant de la voie initiale,
- la fréquence du signal porteur est comprise entre 1 et 30 Ghz, de préférence entre 1 et 10 Ghz,
- cette fréquence du signal porteur est d'environ 2,5 Ghz,
- ledit milieu confiné étant un tunnel allongé selon un axe, les signaux émis et captés ont une polarisation électrique parallèle à cet axe,
- le décalage angulaire entre les axes privilégiés, fixe ou variable, est compris entre 15 et 45°,
- ce décalage est d'environ 20°,
- le milieu confiné étant un tunnel, les axes privilégiés sont décalés transversalement au tunnel,
- pour démoduler en fréquence les signaux reçus sur chacune des deux voies, on mélange ceux-ci avec un signal hyperfréquence de démodulation de fréquence différant de la fréquence du signal porteur d'une valeur déterminant une fréquence intermédiaire comprise entre 30 et 300 Mhz., et on filtre par un filtre passe-bas les signaux mélangés ainsi obtenus sur chaque voie en sorte d'atténuer dans le spectre de ces signaux mélangés les pics correspondant aux hyperfréquences du signal porteur et du signal de démodulation.
   Pour la mise en oeuvre de ce procédé l'invention propose en outre un dispositif de transmission comportant un émetteur et un récepteur adapté à la transmission en milieu confiné d'un signal vidéo formé d'une succession de signaux de ligne d'image vidéo commençant par un signal de synchronisation de format connu et de périodicité connue correspondant à une fréquence connue de synchronisation de ligne, caractérisé en ce que l'émetteur comporte un oscillateur hyperfréquence générant un signal porteur à une entrée duquel le signal vidéo est appliqué en tant que signal de modulation en fréquence, un amplificateur hyperfréquence appliqué à la sortie de cet oscillateur, et une antenne d'émission connectée à la sortie de cet amplificateur hyperfréquence, et en ce que le récepteur comporte deux antennes de réception ayant des diagrammes de rayonnement admettant des axes privilégiés décalés angulairement, deux voies de démodulation connectées à la sortie de ces antennes, et un étage de traitement comportant un étage de validation, un circuit d'analyse et un circuit commandable d'extraction des signaux de synchronisation et de commutation des voies adapté à fournir en sortie le signal démodulé issu de l'une ou l'autre des voies, l'étage de validation étant adapté à tester l'existence, dans les signaux issus des deux voies, d'un signal à la fréquence connue de synchronisation de ligne, et d'indiquer la présence ou l'absence de ce signal au circuit d'analyse qui détermine la voie ayant la meilleure réception et qui commande la commutation par le circuit commandable d'extraction des signaux de synchronisation et de commutation de voies afin de sélectionner la meilleure voie.
   Selon des dispositions préférées de ce dispositif :
- l'étage de validation comporte un circuit de validation pour chaque voie.
- l'étage de validation est adapté à tester l'existence d'un signal à une fréquence connue de synchronisation de trame et le circuit d'analyse commande une commutation de voie à l'instant de la synchronisation trame ou à l'instant d'une synchronisation ligne, selon le désir de l'utilisateur,
- le circuit d'analyse ne commande une commutation de voie que si l'autre voie est meilleure que celle sélectionnée à l'instant considéré, dans le cas d'une commande de commutation à l'instant de la synchronisation trame, et, dans le cas d'une commande à l'instant d'une synchronisation ligne, ne commute pas de voie si les deux voies sont bonnes au même instant ou si elles sont mauvaises toutes les deux au même instant,
- le circuit d'extraction des signaux de synchronisation et de commutation ne teste qu'une des deux voies et, dans la mesure où il y a présence de signaux de synchronisation sur cette voie le signal correspondant est appliqué sur l'équipement de formation d'images, dans la mesure où il y a absence de signaux de synchronisation sur cette même voie le commutateur sélectionne l'autre voie, laquelle est appliquée à l'équipement de formation d'images en présence de signaux de synchronisation alors que dans le cas contraire le commutateur revient sur la voie précédente.
- l'étage de validation est connecté à la sortie de chacune des deux voies, et à deux entrées du circuit commandable de commutation des voies et à deux bornes de commutation de celui-ci,
- l'oscillateur hyperfréquence est à une fréquence choisie entre 1 et 30 Ghz, de préférence entre 1 et 10 Ghz,
- cet oscillateur hyperfréquence est à une fréquence d'environ 2,5 Ghz,
- les antennes de réception, identiques, sont des antennes électriques à polarisation linéaire, disposées dans des plans décalés angulairement,
- le milieu confiné étant un tunnel allongé selon un axe, ces antennes sont polarisées parallèlement à la plus grande dimension transversale de ce tunnel,
- ce dispositif comporte un plan réflecteur métallique dans un coude ou une bifurcation de ce tunnel,
- l'émetteur comporte une caméra générant le signal vidéo à transmettre,
- le récepteur ou/et l'émetteur est (sont) mobile(s),
- les antennes de réception sont décalées angulairement d'un angle compris entre 15 et 45°,
- les antennes de réception sont décalées angulairement d'un angle de 20° environ,
- le milieu confiné étant un tunnel allongé suivant un axe, l'antenne d'émission et l'une des antennes de réception sont orientées perpendiculairement à cet axe,
- chaque voie du récepteur comporte un amplificateur hyperfréquence à faible bruit, un mélangeur recevant un même signal hyperfréquence de démodulation de fréquence différant de la fréquence de l'oscillateur du récepteur d'une valeur déterminant une fréquence intermédiaire comprise entre 30 et 300 Mhz, un filtre passe-bas adapté à cette fréquence intermédiaire, et un démodulateur de fréquence,
- ledit démodulateur de fréquence comporte un étage de compression de signal et un étage démodulateur à boucle à verrouillage de phase ou PLL (en anglais Phase Lock Loop),
- le récepteur comporte un oscillateur de démodulation connecté à un diviseur de puissance connecté aux mélangeurs de chaque voie.

Des objets, caractéristiques et avantages de l'invention ressortent de la description qui suit, donnée à titre d'exemple non limitatif, en regard des dessins annexés sur lesquels :
- la figure 1 est un schéma du signal associé à une ligne d'une image à transmettre ;
- la figure 2 est un schéma synoptique d'un ensemble émetteur-récepteur conforme à l'invention disposé dans un tunnel ;
- la figure 3 est un schéma d'une antenne adaptée à équiper aussi bien l'émetteur que le récepteur ;
- la figure 4 est un schéma de principe de l'émetteur ;
- la figure 5 est un schéma de principe du récepteur ;
- la figure 6 est le circuit du démodulateur de chaque voie du récepteur ;
- la figure 7 est un enregistrement comparant une portion du signal vidéo de la caméra de l'émetteur avec la portion correspondante du signal démodulé à la sortie du démodulateur de la figure 6 ;
- la figure 8 représente l'algorithme de l'un des circuits de validation ;
- la figure 9 représente l'algorithme du circuit d'analyse ; et
- la figure 10 est un schéma de principe d'une variante du récepteur dans laquelle la voie initiale est prioritaire.

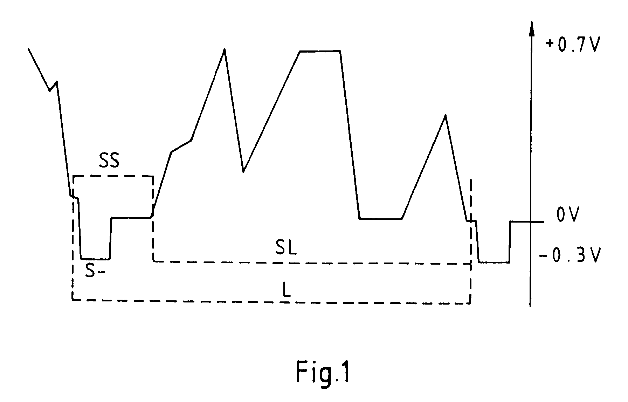

La figure 1 représente schématiquement la forme au cours du temps d'une ligne d'image vidéo en noir et blanc.

Dans l'exemple considéré (qui est classique), chaque ligne L dure 64 »s et commence par un signal SS de synchronisation suivi d'un signal d'information de ligne SL. Ce signal de synchronisation est ici un signal, en créneau, formé d'un signal négatif S- de durée prédéterminée (par exemple 4,7 »s) suivi d'un signal nul. Le signal d'information de ligne est un signal analogique dont l'amplitude (tension) varie entre un niveau minimum (OV) correspondant au noir maximum et un niveau maximum (ici 0,7 V) correspondant au blanc maximum ; ce signal SL dure ici 54 »s.

Une image complète est formée d'un grand nombre de lignes (par exemple 625 lignes) ; ce nombre est bien sûr déterminé par la source (caméra) qui prend ces images.

Selon l'invention, la transmission d'une image entre deux zones d'un tunnel 3 se fait par faisceau hertzien hyperfréquence (entre 1 et 30 Ghz), depuis un émetteur 1 jusqu'à un récepteur 2. Dans l'exemple considéré, l'émetteur 1 est mobile et le récepteur 2 fixe.

Le tunnel peut être assimilé à un guide d'ondes surdimensionné présentant une certaine rugosité ; il est en général plus large que haut (par exemple 4 m x 2,5 m). Une étude statistique de ce "canal" de transmission permet d'évaluer deux paramètres, qui sont l'atténuation linéique et la densité de fluctuations. Le choix, comme support de transmission, d'une onde à hyperfréquence d'environ 2,5 Ghz permet d'obtenir une portée supérieure à 100 mètres, l'image transmise restant de bonne qualité malgré de nombreux évanouissements de signal. Un coude ou une bifurcation 4 du tunnel induit une forte atténuation du signal reçu, mais celle-ci peut être notablement réduite si l'on dispose dans ce coude ou cette bifurcation un plan réflecteur 5 (par exemple une tôle en acier inoxydable de 2 mètres par 2 mètres ou tout autre réflecteur passif). Toutefois l'invention s'applique de préférence à des tunnels rectilignes ou à très grand rayon de courbure.

Un des points de l'invention réside dans le fait d'utiliser deux antennes de réception très proches l'une de l'autre et dans le fait que la décorrélation s'effectue non pas par un décalage important entre les antennes mais par l'utilisation de diagrammes de rayonnements différents.

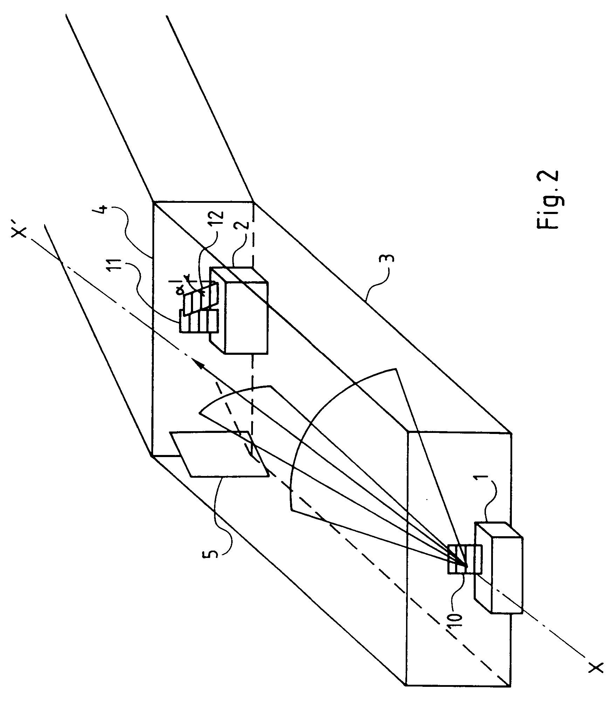

Ainsi l'émetteur 1, dont la structure sera précisée plus loin, comporte une antenne 10 tandis que, selon cette caractéristique importante de l'invention, le récepteur 2, dont la structure sera également précisée plus loin, comporte deux antennes 11 et 12 présentant un angle de dépointage α, par exemple égal à 20° environ. Le dépointage peut être réalisé soit, comme à la figure 2, en utilisant deux antennes identiques orientées différemment, soit (cas non représenté) à l'aide de deux antennes coplanaires mais dont les diagrammes de rayonnement ont des axes privilégiés qui font un angle α. Ce dernier cas correspond à une structure plus compacte et assez simple à réaliser industriellement dans son ensemble. Dans l'exemple représenté l'une, 11, des antennes est orientée selon l'axe X-X du tunnel (ou du tronçon de tunnel dans lequel se trouve le récepteur 2), en direction du récepteur.

Ces antennes 10, 11 et 12 sont avantageusement identiques. Ce sont de préférence des antennes électriques à polarisation linéaire réalisées sur circuit plaqué (par exemple sur un substrat d'époxy de 1,6 mm. d'épaisseur et de grandeur εr = 4,7).

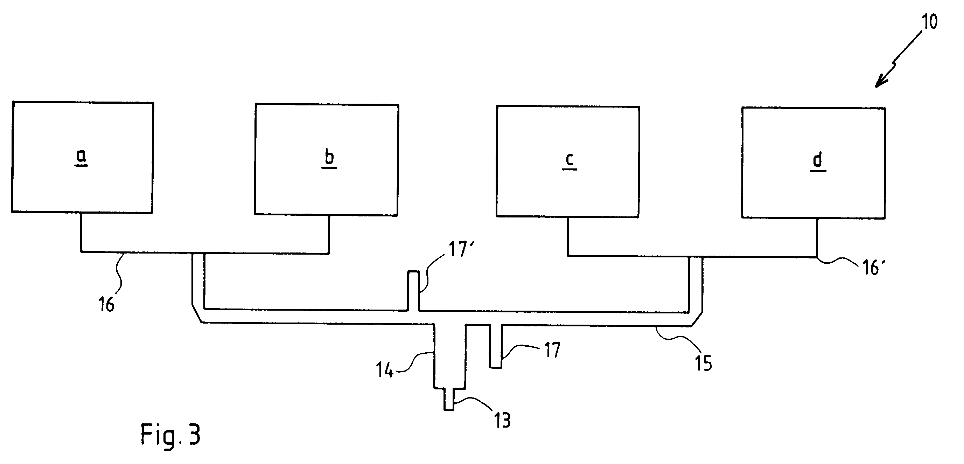

Une représentation schématique d'une telle antenne 10, 11 ou 12 est donnée à la figure 3.

Cette antenne 10 est constituée de plusieurs éléments rayonnants connus en soi a, b, c et d. De tels éléments ont déjà été étudiés par de nombreux auteurs, par exemple dans "MICROSTRIP ANTENNAS", de I.J. BAHHL et P. BHARTHIA édité par ARTECH HOUSE 1980. Chaque élément (parfois appelé "microstrip patch") comporte un fin ruban par les extrémités duquel il rayonne. Le fait de multiplier le nombre d'éléments permet d'augmenter le gain de l'antenne et de définir sa directivité.

Des études ont montré qu'il était préférable de disposer l'antenne en sorte qu'elle soit polarisée parallèlement à la plus grande dimension du tunnel, ainsi que cela est représenté à la figure 2.

Dans l'exemple de la figure 3, chaque élément a une impédance de 100 Ohms au centre. Pour adapter les quatre éléments sur 50 Ohms il a été nécessaire de prévoir un tronçon d'adaptation 14 d'impédance de 35 Ohms entre l'entrée 13 et une bande 15 de liaison à chacune des paires d'éléments a et b, c et d, les éléments de chaque paire étant reliés l'un à l'autre par une bande 16 ou 16′. Des pattes (en anglais "stub" d'adaptation) 17 ou 17′ peuvent être prévues pour supprimer la partie imaginaire de l'impédance d'entrée de l'antenne. A titre d'exemple les bandes 14, 15 et 16 ou 16′ ont respectivement des largeurs de 5 mm, 2,8 mm et 1 mm et les éléments ont un format de 35 mm x 27 mm.

Dans cet exemple de quatre éléments (distants dans le plan vertical de la demi-longueur d'onde de la fréquence porteuse), l'ouverture à mi-puissance de l'antenne 10 est, d'après des mesures en chambre anéchoïde, d'environ 20-25° dans le plan vertical et de 65-70° dans le plan horizontal.

On a constaté qu'une telle antenne a un spectre de 38 Mhz autour de la fréquence de 2,51 Ghz pour un taux d'ondes stationnaires (en abrégé TOS) de 1,2 ; cette large bande passante explique ce choix pour la fréquence porteuse dans le mode de réalisation proposé ici. Cela permet le cas échéant la transmission de plusieurs canaux de caméra (télévision), un canal occupant un spectre d'environ 6 Mhz.

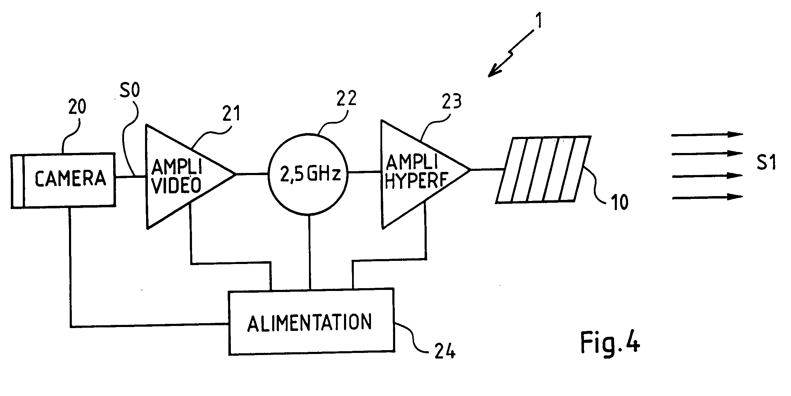

Un schéma de principe de l'émetteur 1 est donné à la figure 4.

Cet émetteur 1 est constitué de six modules, à savoir :
- une caméra 20 de type CCD (circuit à couplage de charge ce qui se traduit en anglais par Charge Coupled Device),
- un amplificateur vidéo 21 à 6 Mhz de bande passante,
- un oscillateur hyperfréquence 22 réglé à la fréquence précitée de 2,5 Ghz,
- un amplificateur de puissance hyperfréquence 23 à cette même fréquence de 2,5 Ghz,
- un circuit d'alimentation 24,
- et l'antenne 10 précitée.

La caméra 20 a par exemple la référence CTS 01 de chez PHILIPS avec 604 lignes de 588 points en mode entrelacé ; sa sortie est de 1 Vcc en vidéo composite pour une impédance de 75 Ohms, sa consommation est de 200 mA sous 12 V et sa sensibilité est de 0,05 lux.

L'amplificateur vidéo 21 est optionnel ; il sert si nécessaire à adapter le signal vidéo de la caméra 20 à l'entrée de modulation de l'oscillateur 22. Dans le cas considéré ici, cet amplificateur, s'il existe, est adapté 75 Ohms et sort un signal de 1 V (norme CCIR) et sa bande passante est de 5 Mhz.

L'oscillateur hyperfréquence 22 émet un signal de sortie modulé par le signal vidéo de la caméra 20 éventuellement amplifié par l'ampli vidéo 21. Il s'agit ici d'un oscillateur à 2,5 Ghz de la Société A.D.E. et de type ASY 2200-2500 (programmable) ; sa consommation est de 200 mA sous 15 V et sa puissance de sortie est de 10 dBm. Une telle source synthétisée est par exemple déjà utilisée dans les courses automobiles pour les retransmissions vidéo des voitures de Formule 1. La mise au point de l'antenne 10 a permis d'adapter cette source hyperfréquence particulière à la transmission en tunnel.

L'amplificateur hyperfréquence 23 est ici de type AFD2-020040-25 P de la Société MITEQ ; il a un gain de 15 dB et une puissance de sortie de 25 dBm ; il consomme 380 mA sous 15 V.

La puissance d'émission de l'antenne 10 est de 300 mW.

De manière à rendre portable l'émetteur 1, le bloc d'alimentation 24 y a été intégré. Il comporte une batterie 12 V-6,5 A.h, ainsi qu'un convertisseur continu-continu 12 V-15 V avec 800 mA pour l'alimentation des modules 22 et 23. De préférence, chacun des modules 20 à 23 est alimenté au travers d'un convertisseur continu-continu ce qui permet de découpler les masses de ces modules par rapport à la masse de la batterie. Un circuit de test est prévu pour interrompre l'alimentation de ces modules lorsque la batterie est déchargée. Un système de charge à courant constant est avantageusement intégré à ce bloc d'alimentation. Le principe et la structure des divers composants précités de ce bloc d'alimentation sont connus en soi et il est dans la compétence normale de l'homme de métier de les assembler pour réaliser ce bloc. Celui-ci ne sera donc pas détaillé plus avant.

Soit S1 le signal rayonné par l'antenne 10.

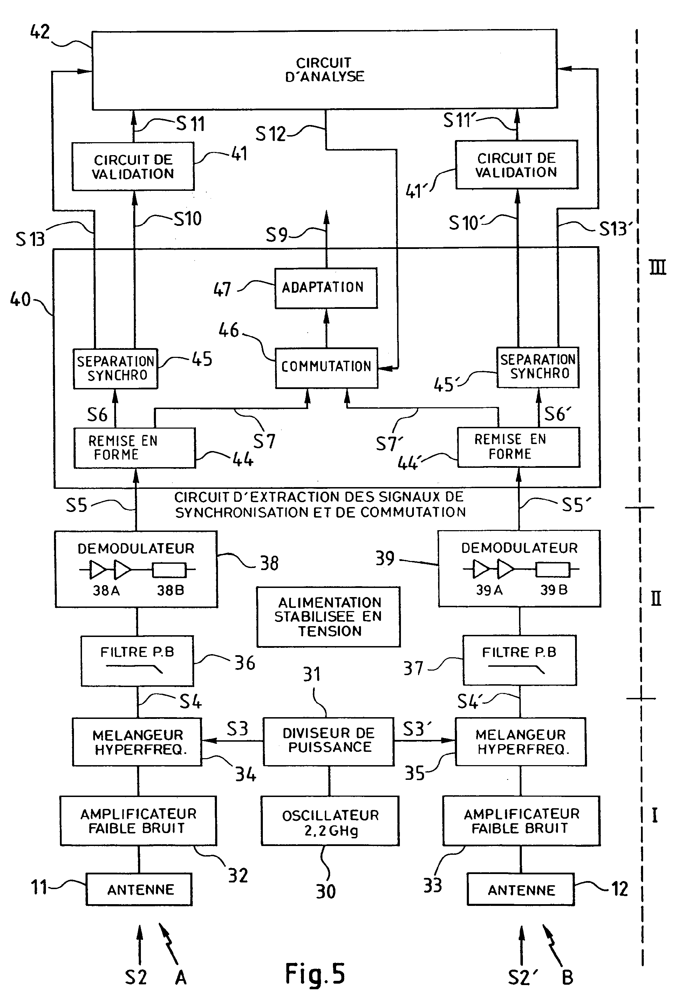

La structure générale du récepteur 2 est donnée à la figure 5.

Ainsi qu'on l'a vu ce récepteur comporte deux antennes 11 et 12 ne différant que par l'orientation de leur direction privilégiée de réception. On notera S2 et S2′ les signaux captés par ceux-ci.

Une autre possibilité serait d'utiliser deux antennes éloignées d'au moins dix fois la longueur d'onde de la fréquence porteuse afin d'assurer une bonne décorrélation des signaux reçus par ces antennes, mais ceci est au prix d'un encombrement important (environ 1,2m).

Ces deux antennes constituent l'entrée de deux voies identiques parallèles A et B aboutissant à un circuit 40 d'extraction de signaux de synchronisation et de commutation de voie (ou abrégé : circuit de discrimination et de commutation).

Dans son ensemble, le récepteur 2 peut se décomposer en une partie à hyperfréquence I, une partie à fréquence intermédiaire II et une partie numérique et électronique à basse fréquence III.

La partie hyperfréquence comporte un oscillateur local 30 et un diviseur de puissance 31 et, pour chacune des voies A et B, l'antenne 11 ou 12, un amplificateur à faible bruit 32 ou 33, et un mélangeur hyperfréquence 34 ou 35 raccordé à l'oscillateur local 30 par l'intermédiaire du diviseur de puissance 31.

Les amplificateurs à faible bruit 32 et 33 sont des constituants essentiels du récepteur 2 puisqu'ils déterminent la sensibilité de ce dernier. En fait, cette sensibilité est limitée par le bruit thermique du récepteur. Il s'agit par exemple d'un amplificateur hyperfréquence de type AFD3-024026-18 de chez MITEQ avec un gain de 30 dB pour un facteur de bruit de 1,8 dB dans la gamme d'hyperfréquences 2,4 à 2,6 Ghz, et avec une puissance de sortie de 10 dBm ; il consomme 108 mA sous 15 V.

En fait, l'optimum pour de tels amplificateurs (identiques) est un faible bruit combiné à un point de compression aussi élevé que possible.

L'oscillateur local 30 génère un signal hyperfréquence, destiné à être partagé entre les deux voies avec une puissance du même ordre de grandeur que les signaux issus des amplificateurs faible bruit 32 et 33, et avec une hyperfréquence différant de celle du signal émis S1 d'une valeur définissant une fréquence intermédiaires (quelques dizaines à quelques centaines de Mhz, à savoir de préférence entre 30 et 300 Mhz) sur laquelle se poursuivra le traitement. Il s'agit par exemple d'un oscillateur hyperfréquence de la série FAM de MITEQ, verrouillé en phase et dont la fréquence est ajustable mécaniquement ; celle-ci a été ici choisie égale à 2,2 Ghz. Sa puissance de sortie de 13 dBm est suffisante pour, après division par le module 31, faire fonctionner les mélangeurs 34 et 35 dans de bonnes conditions.

Le diviseur de puissance est adapté en son entrée et sur ses deux sorties de manière que les signaux de sortie S3 et S3′, appliqués aux mélangeurs, soient de même amplitude égale à la moitié du signal d'entrée et avec la même phase. Il s'agit par exemple d'un diviseur de WILKINSON, tel que décrit par exemple dans "Conception des Circuits Micro-Ondes" de T.C. EDWARDS édité par MASSON-1984. Dans l'exemple considéré ce circuit est constitué, sur un substrat d'époxy, d'une ligne à 50 Ohms qui se sépare en deux lignes à 75 Ohms formant des tronçons de longueur égale au quart de la longueur d'onde associée à l'oscillateur 30 ; ce circuit est ainsi à bande étroite (de l'ordre de 10 % c'est-à-dire d'environ 200 Mhz).

Les mélangeurs 34 et 35 sont des modules à faible pertes de conversion et de bonne isolation. Il s'agit par exemple de mélangeurs large bande (2-12,4 Ghz) de type HMXR-5001 de HEWLETT PACKARD, du type double équilibré ; les pertes de conversion sont de l'ordre de 8 dB à 2,5 Ghz. Le taux d'ondes stationnaires en entrée est assez important. C'est un module qui répond aux normes militaires.

Les spectres en sortie des mélangeurs correspondant au produit S4 ou S4′ du signal issu de l'amplificateur 32 ou 33 et de l'oscillateur local à 2,2 Ghz comportent des raies à 2,5 Ghz et 2,2 Ghz ainsi qu'à la fréquence d'environ 300 Mhz qui correspond à leur différence.

C'est sur cette dernière fréquence, dite fréquence intermédiaire, que se poursuit le traitement de signal, dans la partie II du récepteur.

Cette partie à fréquence intermédiaire comporte pour chaque voie un filtre passe-bas 36 ou 37 et un démodulateur 38 ou 39.

Les filtres 36 et 37 ont pour objet de ne retenir dans le spectre de sortie des mélangeurs que la fréquence intermédiaire.

Ces filtres ont une bonne réponse en temps de propagation de groupe. Ils sont de préférence réalisés selon un prototype de BUTTERWORTH d'ordre 5, tel que cela est décrit par exemple dans "Filtre Actif" de P. BILSTEIN - Editions Radio ou dans "Les micro-ondes" de R. BADOUAL édité par MASSON-1980. La fréquence de coupure à -3dB est de 500 Mhz et l'atténuation est de 30 dB à 1 Ghz.

Chaque filtre est réalisé en structure époxy, ce qui permet une grande reproductibilité et ne nécessité aucun composant ; trois capacités en série ont été constituées par le circuit imprimé et le plan de masse, et deux selfs intermédiaires ont été matérialisées par la longueur des lignes de propagation. Un tel filtre est symétrique du fait de l'ordre impair ; il est adapté sur 50 Ohms avec des pertes de 2 dB.

Les démodulateurs 38 et 39 sont tels que leur dynamique soit importante et que leur temps de réponse soit très rapide. Pour cela, une démodulation par compression de niveau a été préférée à une démodulation classique par contrôle automatique de gain (C.A.G.) pour laquelle peuvent apparaître des risques d'oscillations dans cette gamme de fréquences intermédiaires. Une telle compression de niveau est bien adaptée aux fréquences intermédiaires élevées et permet d'avoir une dynamique de 60 dB pour un temps de réponse extrêmement rapide (le temps de réponse d'un amplificateur logarithmique peut être de l'ordre de la nanoseconde).

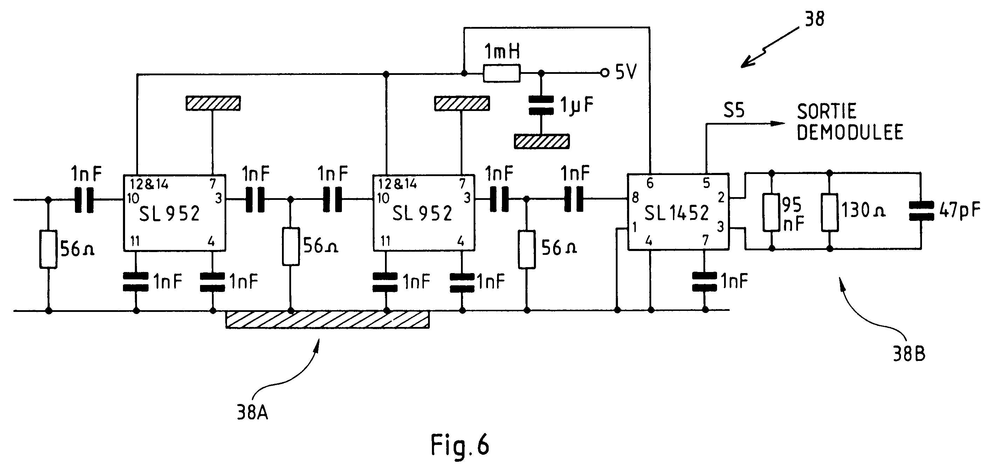

En fait, le choix de la structure du démodulateur 38 ou 39 dépend du choix de la fréquence intermédiaire et donc de la fréquence de l'oscillateur, et vice-versa. C'est ainsi que dans le cas présent, la fréquence intermédiaire a été choisie de 300 Mhz pour pouvoir utiliser des composants classiques de la Société PLESSEY dans le circuit de la figure 6.

Plus précisément, le circuit 38 (identique à celui du démodulateur 39) comporte un étage de compression de signal 38 A et un étage 38 B de démodulation proprement dite.

L'étage 38A (ou 39A) est constitué de deux amplificateurs limiteurs SL 952 en série.

L'étage 38B (ou 39B) comporte le composant SL 1452 de PLESSEY du type PLL qui est facile à mettre en oeuvre. Un circuit résonnant de type bouchon avec notamment une self de 95 nF complète ce composant (circuit accordé sur 75 Mhz, Q = 10).

Les condensateurs et les résistances sont réalisés par la technologie CMS (c'est-à-dire composants montés en surface).

Le circuit de la figure 6 est accordé sur 300 Mhz et démodule un signal entre -43 dBm (64 dB/»V) et 15 dBm, soit une dynamique propre du circuit de 58 dB.

L'ensemble consomme 400 mA sous 5 V.

On notera S5 et S5′ les signaux de sortie des démodulateurs.

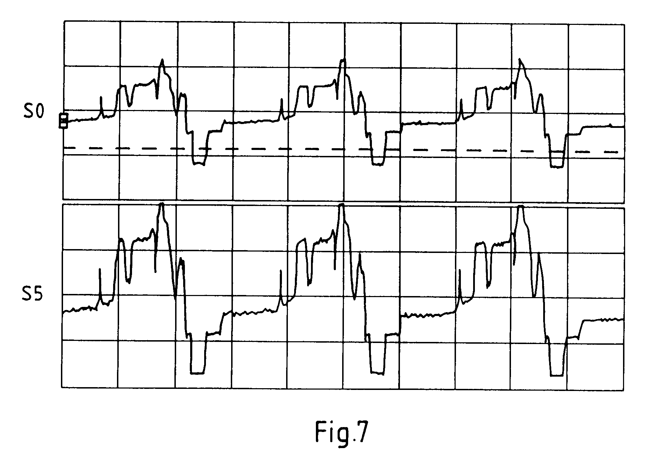

L'examen des deux courbes SO (sortie de la caméra 20) et S5 de la figure 7 révèle une très bonne restitution par le circuit de démodulation du signal SO directement issu de la caméra 20.

Ces signaux démodulés S5 et S5′ issus des voies A et B sont appliqués à la partie III du récepteur qui est destinée à optimiser la formation d'une image à partir de ces signaux grâce à l'usage d'un test approprié de discrimination adapté à atténuer les conséquences d'éventuels évanouissements temporaires de l'un ou l'autre de ces signaux.

Cette partie III comporte le circuit de discrimination et de commutation 40 (incluant un étage de remise en forme et un circuit de séparation des signaux de synchronisation pour chacun des signaux S5 et S5′ et un circuit d'adaptation pour la voie sélectionnée), deux circuits de validation 41 et 41′ qui procèdent à des tests de présence de signaux de synchronisation, l'un pour le signal S6, l'autre pour le signal S'6 ; chaque circuit de validation envoie une indication de bon ou mauvais fonctionnement (S11 et S11′) à un circuit d'analyse 42 qui agit en fonction des résultats des tests sur le circuit de commutation par le signal S12 pour envoyer le signal de l'une des voies (noté S9) sur un élément de formation d'images non représenté.

Selon l'invention, chaque circuit de validation teste l'existence du signal de synchronisation ligne au début de chaque ligne.

Dans l'exemple considéré, les signaux S5 et S5′ issus des démodulateurs sur les voies A et B sont des signaux vidéo d'amplitude 200 mV avec un décalage ("offset" en anglais) de 2 V. Ils sont en vidéo inversée.

Le circuit d'extraction des signaux de synchronisation et de commutation 40 est représenté de façon schématique à la figure 5 : il comporte deux étages de remise en forme 44 et 44′ réalisés par le circuit MC 34 083 de MOTOROLA, deux étages 45 et 45′ de séparation des signaux de synchronisation ligne (S10, S10′) et trame (S13, S13′) réalisés par les circuits LM 1881 de NATIONAL SEMICONDUCTOR, un circuit de commutation 46 réalisé par le DG 303 de NATIONAL SEMICONDUCTOR qui est assimilable à une porte analogique qui comporte une borne commandée par le circuit d'analyse, et un circuit d'adaptation 47 réalisé par le composant LM 1201 de NATIONAL SEMICONDUCTOR.

Les circuits de validation 41 et 41′ reçoivent les signaux S10 et S10′ de synchronisation ligne et image provenant des circuits 45 et 45′. Chaque circuit de validation est géré par un microcontrôleur 80C31 de INTEL.

Les circuits de validation 41 et 41′ testent en permanence, grâce à la combinaison des circuits 45 et 45′, l'apparition, dans les signaux S6 ou S6′ issus des circuits de remise en forme 44 et 44′, donc dans S5 et S5′, des signaux de synchronisation de ligne (voir figure 1).

Tant que ces signaux apparaissent (avec une périodicité de 64 »s dans l'exemple considéré), les circuits de validation indiquent un bon fonctionnement du circuit d'analyse par l'intermédiaire des signaux S11 et S11′.

Le circuit d'analyse 42 est également géré par un microcontrôleur 80C31 de INTEL qui reçoit d'une part les signaux de bon fonctionnement provenant des circuits de validation 41 et 41′, et d'autre part les signaux de synchronisation trame S13 et S13′ issus des circuits de séparation 45 et 45′. Le circuit d'analyse propose un régime optimisé (diversité) dans lequel on cherche à retenir à chaque instant la meilleure voie.

Les circuits de validation et le circuit d'analyse possèdent chacun une mémoire ROM 27 HC 128 et un circuit de verrouillage des adresses basses, le composant 74 HC 373 de NATIONAL SEMICONDUCTOR.

Chaque circuit de validation teste en permanence la présence ou la disparition des signaux de synchronisation de ligne de chaque voie de réception (S5 et S5′) respective.

Le circuit d'analyse reçoit un signal par voie provenant des circuits de validation. Les états de ces signaux indiquent une bonne ou mauvaise réception de l'une ou l'autre voie.

La priorité de départ est accordée a priori à l'une des voies, par exemple la voie A.

Le circuit d'analyse teste en permanence les signaux issus des circuits de validation. Tant que ces signaux indiquent une bonne réception sur les deux voies, on garde le choix de la voie A.

Par contre, si la réception en voie A devient mauvaise, le système teste la réception de la voie B. Si celle-ci est bonne, le système d'analyse 42 commande le circuit de commutation afin de le faire basculer sur la voie B.

Lorsque la réception est mauvaise sur les deux voies en même temps, le système d'analyse décide de rester sur la voie où il se trouvait avant la mauvaise réception. De même, lorsque la réception est bonne sur les deux voies au même instant, le système d'analyse ne commande pas de nouvelle commutation et reste sur sa voie initiale.

Selon l'invention, la discrimination se fait, avec comme critère de choix le signal de synchronisation ligne, ce qui permet de tester périodiquement la qualité de l'image. De plus, le circuit a un temps de réponse d'une ligne et il connaît, par les signaux S13 et S13′, l'instant de la synchronisation trame. Deux modes de fonctionnement sont donc proposés : commutation au début d'une synchronisation trame ou commutation au début d'une synchronisation ligne.

La commutation au début d'une synchronisation trame (donc par demi-image) se base sur la connaissance du nombre de lignes mauvaises sur chacune des voies. Le système commute alors sur la voie où il y a le moins d'erreurs. L'avantage de cette solution est d'éviter, lors d'images très perturbées, de commuter sans cesse d'une voie sur l'autre.

La commutation au début d'une synchronisation ligne permet de sélectionner très rapidement la meilleure voie et cette sélection est remise en cause à chaque synchronisation ligne.

On appréciera que le récepteur a nécessité la réalisation de plusieurs modules, car il n'existe pas sur le marché de récepteur vidéo en diversité. Il est constitué de deux voies identiques, d'un circuit d'analyse et d'un circuit de commutation de voie.

Les circuits de validation et le circuit d'analyse sont réalisés avec des microcontrôleurs grâce auxquels on peut modifier par logiciel les temps de test de manière à s'adapter aux différents standards vidéo en vigueur et, si besoin est, les critères de validation.

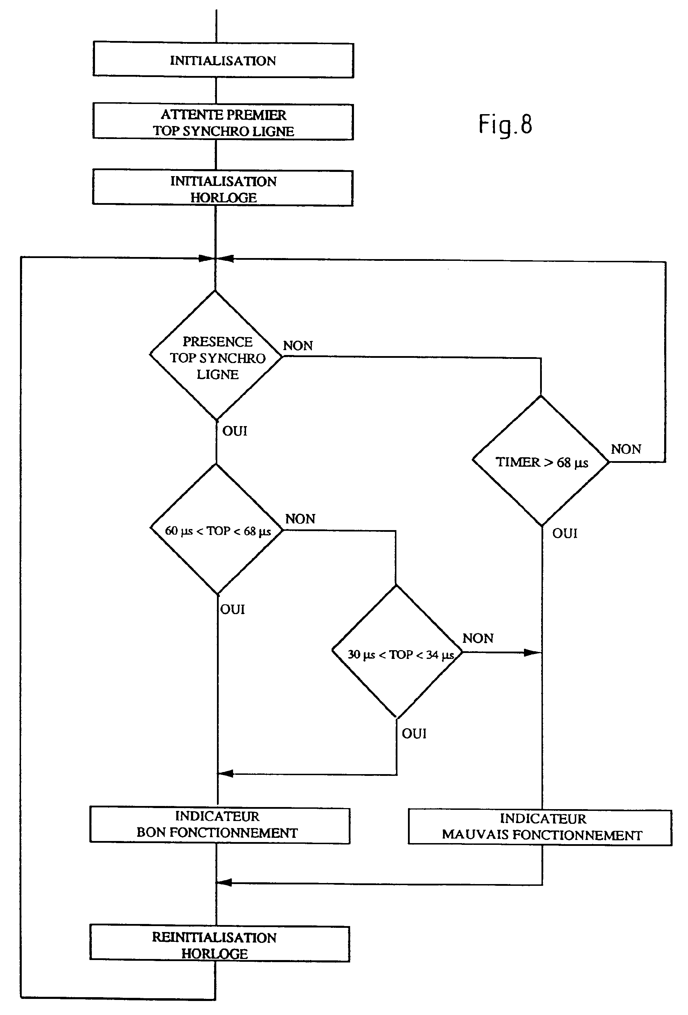

L'algorithme du circuit de validation (figure 8) teste les signaux de synchronisation ligne par ligne ; cependant de nombreuses variantes de critères de qualité d'images sont également envisageables comme la prise en compte de plusieurs lignes.

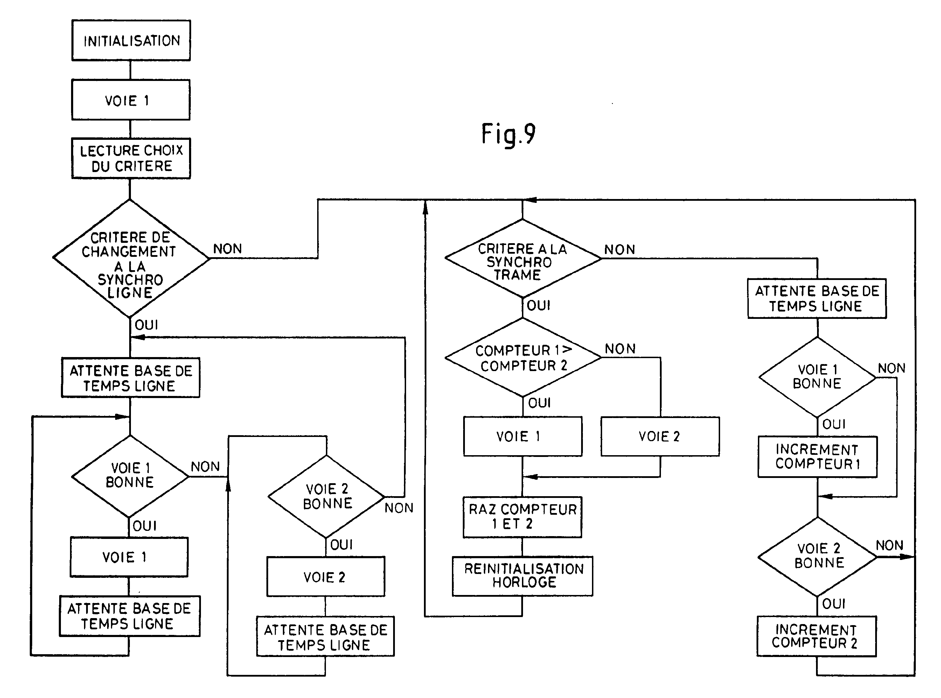

De même, l'algorithme du circuit d'analyse (figure 9) qui commande l'équipement de formation d'images peut commuter à différents stades de la séquence image ; par exemple, dès la formation d'un signal de synchronisation ligne (partie gauche) ou dès le début du signal de synchronisation trame (partie droite) ou tout autre signal caractéristique d'une image.

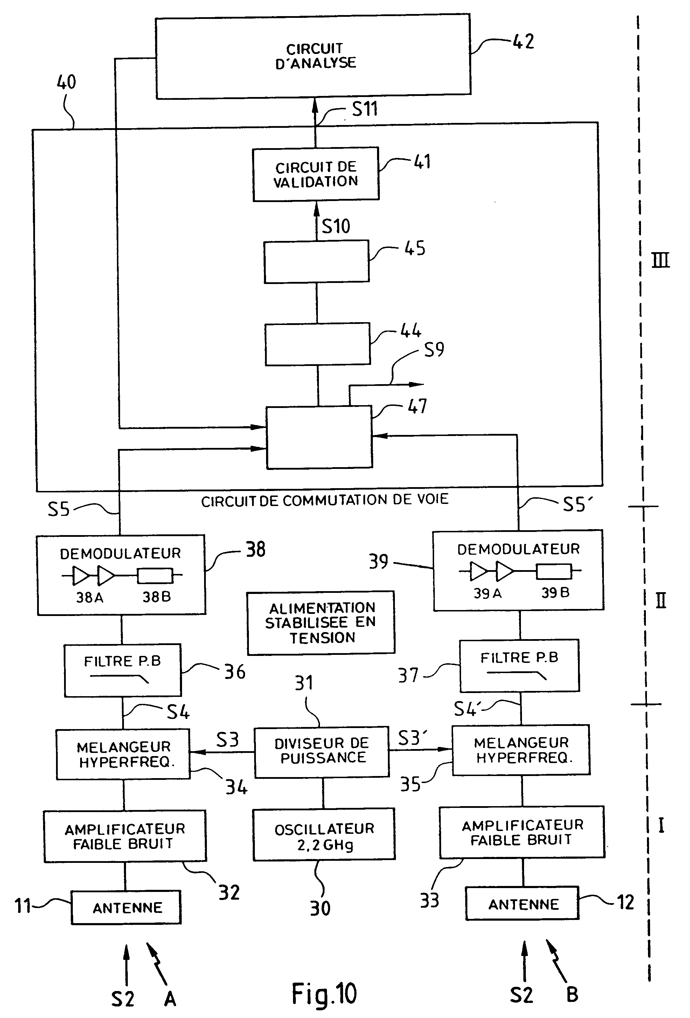

Il va de soi que la description qui précède n'a été proposée qu'à titre d'exemple non limitatif et que de nombreuses variantes peuvent être proposées par l'homme de l'art sans sortir du cadre de l'invention. Ainsi, une version simplifiée qui consiste à définir une voie prioritaire. Le circuit de discrimination teste en permanence la présence des signaux de synchronisation ligne ; tant que ces signaux apparaissent (à la fréquence de 64»s dans l'exemple considéré) on garde le choix de la voie considérée. Par contre, en l'absence de signal de synchronisation, on teste l'autre voie et en présence du signal de synchronisation ligne, on commute sur cette voie. Si à son tour cette voie devient défaillante on revient sur la voie prioritaire et on recommence le processus. La figure 10 est un synoptique d'un tel circuit de discrimination ayant une voie prioritaire.

Le terme "meilleure réception" employé ci-dessus n'implique pas que l'on puisse remplacer le degré de qualité des images, mais signifie en pratique "bonne" par rapport à "mauvaise" (critère tout ou rien).

## Revendications

1. Procédé pour la transmission en milieu confiné, entre des zones d'émission ou de réception mobiles ou fixes, d'un signal vidéo formé d'une succession de signaux de ligne d'image vidéo commençant par un signal de synchronisation de format connu et de périodicité connue correspondant à une fréquence connue de synchronisation de ligne, caractérisé en ce qu'en la zone d'émission (1) on module en fréquence avec ce signal vidéo un signal porteur de fréquence comprise dans la gamme des hyperfréquences, on émet (10) par faisceau hertzien ce signal porteur modulé vers la zone de réception (2), on capte en cette zone de réception deux signaux (S2, S2′) reçus selon deux axes privilégiés décalés angulairement, on démodule en fréquence chacun de ces signaux reçus selon deux voies identiques de traitement (A, B), on commence par appliquer (47) à un équipement de formation d'image le signal reçu démodulé (S9) sortant de l'une prédéterminée des deux voies dite initiale tant qu'on détecte (45, 41, 42) dans ce signal reçu démodulé sortant de cette voie l'existence d'un signal périodique de fréquence égale à la fréquence de synchronisation de ligne vidéo, puis on change de voie (S12) lorsque ce signal périodique disparaît dans une voie mais est détecté sur l'autre voie, et ainsi de suite.

2. Procédé selon la revendication 1, caractérisé en ce que, lorsqu'à un instant donné aucun signal périodique de fréquence égale à la fréquence de synchronisation ligne vidéo n'est détecté, ni dans le signal appliqué à l'équipement de formation d'image, ni dans l'autre signal, on continue à appliquer ce même signal appliqué jusqu'à cet instant.

3. Procédé selon la revendication 1, caractérisé en ce que, lorsqu'à un instant donné au moins un signal périodique de fréquence égale à la fréquence de synchronisation est détecté dans un des signaux reçus démodulés, on applique à l'équipement de formation d'image la voie ayant la meilleure réception.

4. Procédé selon la revendication 3, caractérisé en ce que la commutation sur la meilleure voie est commandée à l'instant de la réception en la zone de détection du signal périodique de fréquence de synchronisation de la première ligne suivante ou de synchronisation de la première trame suivante.

5. Procédé selon la revendication 1, caractérisé en ce que, lorsqu'à un instant donné aucun signal périodique de fréquence égale à la fréquence de synchronisation n'est détecté dans aucun des signaux reçus démodulés, on applique à l'équipement de formation d'image le signal sortant de la voie initiale.

6. Procédé selon l'une quelconque des revendications 1 à 5, caractérisé en ce que la fréquence du signal porteur est comprise entre 1 et 30 Ghz.

7. Procédé selon la revendication 6, caractérisé en ce que cette fréquence du signal porteur est d'environ 2,5 Ghz.

8. Procédé selon l'une quelconque des revendications 1 à 7, caractérisé en ce que, ledit milieu confiné étant un tunnel (3) allongé selon un axe, on capte dans la zone de réception (2) les vibrations électriques des signaux issus de la zone d'émission (1), les vibrations électriques pouvant être parallèles à cet axe ou de révolution par rapport à cet axe.

9. Procédé selon l'une quelconque des revendications 1 à 8, caractérisé en ce que le décalage angulaire entre les axes privilégiés, fixe ou variable, est compris entre 15 et 45°.

10. Procédé selon la revendication 9, caractérisé en ce que ce décalage est d'environ 20°.

11. Procédé selon l'une quelconque des revendications 1 à 10, caractérisé en ce que, le milieu confiné étant un tunnel, les axes privilégiés sont décalés transversalement au tunnel.

12. Dispositif de transmission comportant un émetteur (1) et un récepteur (2) adapté à la transmission en milieu confiné (3) d'un signal vidéo formé d'une succession de signaux de ligne d'image vidéo commençant par un signal de synchronisation (SS) de format connu et de périodicité connue correspondant à une fréquence connue de synchronisation de ligne, caractérisé en ce que l'émetteur comporte un oscillateur hyperfréquence (22) générant un signal porteur à une entrée duquel le signal vidéo est appliqué en tant que signal de modulation en fréquence, un amplificateur hyperfréquence (23) appliqué à la sortie de cet oscillateur, et une antenne d'émission (10) connectée à la sortie de cet amplificateur hyperfréquence, et en ce que le récepteur (2) comporte deux antennes de réception (11, 12) ayant des diagrammes de rayonnement admettant des axes privilégiés décalés angulairement, deux voies (A, B) de démodulation connectées à la sortie de ces antennes, et un étage de traitement (III) comportant un étage de validation (41, 41′), un circuit d'analyse (42) et un circuit commandable d'extraction des signaux de synchronisation et de commutation des voies (40) adapté à fournir en sortie le signal démodulé issu de l'une ou l'autre des voies, l'étage de validation étant adapté à tester l'existence, dans les signaux issus des deux voies, d'un signal à la fréquence connue de synchronisation de ligne, et d'indiquer la présence ou l'absence de ce signal au circuit d'analyse qui détermine la voie ayant la meilleure réception et qui commande la commutation par le circuit commandable d'extraction des signaux de synchronisation et de commutation de voies afin de sélectionner la meilleure voie.

13. Dispositif selon la revendication 12, caractérisé en ce que l'étage de validation comporte un circuit de validation pour chaque voie.

14. Dispositif selon la revendication 12, caractérisé en ce que l'étage de validation est adapté à tester l'existence d'un signal à une fréquence connue de synchronisation de trame et en ce que le circuit d'analyse commande une commutation de voie à l'instant de la synchronisation trame ou à l'instant d'une synchronisation ligne, selon le désir de l'utilisateur.

15. Dispositif selon l'une quelconque des revendications 12 à 14, caractérisé en ce que le circuit d'analyse ne commande une commutation de voie que si l'autre voie est meilleure que celle sélectionnée à l'instant considéré, dans le cas d'une commande de commutation à l'instant de la synchronisation trame, et, dans le cas d'une commande à l'instant d'une synchronisation ligne, ne commute pas de voie si les deux voies sont bonnes au même instant ou si elles sont mauvaises toutes les deux au même instant.

16. Dispositif selon la revendication 12, caractérisé en ce que le circuit d'extraction des signaux de synchronisation et de commutation (40) ne teste qu'une des deux voies et, dans la mesure où il y a présence de signaux de synchronisation sur cette voie le signal correspondant est appliqué sur l'équipement de formation d'images, dans la mesure où il y a absence de signaux de synchronisation sur cette même voie le commutateur (47) sélectionne l'autre voie, laquelle est appliquée à l'équipement de formation d'images en présence de signaux de synchronisation alors que dans le cas contraire le commutateur (47) revient sur la voie précédente.

17. Dispositif selon l'une quelconque des revendications 12 à 16, caractérisé en ce que l'oscillateur hyperfréquence (22) est à une fréquence choisie entre 1 et 30 Ghz.

18. Dispositif selon la revendication 17, caractérisé en ce que cet oscillateur hyperfréquence est à une fréquence d'environ 2,5 Ghz.

19. Dispositif selon l'une quelconque des revendications 12 à 18, caractérisé en ce que les antennes de réception (11, 12), sont des antennes électriques identiques plaquées à polarisation linéaire disposées dans des plans décalés angulairement.

## Patentansprüche

1. Verfahren zur Übertragung eines Videosignales in abgeschlossener Umgebung zwischen beweglichen oder festen Sende- oder Empfangsbereichen, das von einer Folge von Videobild-Zeilensignalen gebildet wird, welche mit einem Synchronisationssignal bekannter Form und Periodizität beginnen, das einer bekannten Frequenz zur Zeilensynchronisation entspricht, **dadurch gekennzeichnet**, daß man im Sendebereich (1) mit diesem Videosignal ein Trägersignal frequenzmoduliert, dessen Frequenz im Ultrahochfrequenzbereich liegt, daß man dieses modulierte Trägersignal durch einen Richtstrahl in Richtung auf den Empfangsbereich (2) aussendet (10), daß man in diesem Empfangsbereich zwei Signale aufnimmt, die längs zweier zueinander in einem Winkel stehender Vorzugsachsen empfangen werden, daß man jedes dieser empfangenen Signale über zwei identische Verarbeitungsstrecken (A, B) hinsichtlich seiner Frequenz demoduliert, daß man zunächst das empfangene, demodulierte und von einer vorbestimmten, Anfangsstrecke genannten Strecke der zwei Strecken kommende Signal (S9) einer Einrichtung zum Bildaufbau zuleitet (47), und zwar solange man in diesem empfangenen, demodulierten und von dieser Strecke kommenden Signal ein periodisches Signal mit einer Frequenz gleich der Videozeilen-Sychronisationsfrequenz feststellt (45, 41, 42), wonach man die Strecke wechselt (S12), wenn dieses periodische Signal auf einer Strecke verschwindet, jedoch auf der anderen Strecke festgestellt wird, und so fort.

2. Verfahren nach Anspruch 1, dadurch gekennzeichnet, daß man, wenn zu einem gegebenen Zeitpunkt weder im Signal, das der Einrichtung zum Bildaufbau zugeleitet wird, noch im anderen Signal ein periodisches Signal mit einer Frequenz gleich der Videozeilen-Synchronisationsfrequenz festgestellt wird, das bis zu diesem Zeitpunkt zugeleitete Signal weiterhin zuleitet.

3. Verfahren nach Anspruch 1, dadurch gekennzeichnet, daß man, wenn zu einem gegebenen Zeitpunkt mindestens ein periodisches Signal mit einer Frequenz gleich der Synchronisationsfrequenz in einem der empfangenen, demodulierten Signale festgestellt wird, die Einrichtung zum Bildaufbau mit der Strecke mit besserem Empfang verbindet.

4. Verfahren nach Anspruch 3, dadurch gekennzeichnet, daß die Umschaltung auf die bessere Strecke zu dem Zeitpunkt ausgelöst wird, zu dem im Nachweisbereich das periodische Synchronisationsfrequenz-Signal für die erste, folgende Zeile oder das erste, folgende Halbbild empfangen wird.

5. Verfahren nach Anspruch 1, dadurch gekennzeichnet, daß, wenn zu einem gegebenen Zeitpunkt in keinem der empfangenen, demodulierten Signale ein periodisches Signal mit einer Frequenz gleich der Synchronisationsfrequenz festgestellt wird, der Einrichtung zum Bildaufbau das von der Anfangsstrecke kommende Signal zugeleitet wird.

6. Verfahren nach einem der Ansprüche 1 bis 5, dadurch gekennzeichnet, daß die Frequenz des Trägersignals im Bereich von 1 bis 30 GHz liegt.

7. Verfahren nach Anspruch 6, dadurch gekennzeichnet, daß diese Frequenz des Trägersignals etwa 2,5 GHz beträgt.

8. Verfahren nach einem der Ansprüche 1 bis 7, dadurch gekennzeichnet, daß es sich bei dieser abgeschlossenen Umgebung um einen längs einer Achse verlaufenden, länglichen Tunnel (3) handelt und im Empfangsbereich (2) die vom Sendebereich (1) stammenden elektrischen Schwingungen aufgenommen werden, die parallel zu dieser Achse verlaufen oder sich um diese Achse drehen können.

9. Verfahren nach einem der Ansprüche 1 bis 8, dadurch gekennzeichnet, daß der Versatz-Winkel zwischen den festen oder veränderlichen Vorzugsachsen im Bereich von 15° bis 45° liegt.

10. Verfahren nach Anspruch 9, dadurch gekennzeichnet, daß der Versatz etwa 20° beträgt.

11. Verfahren nach einem der Ansprüche 1 bis 10, dadurch gekennzeichnet, daß die abgeschlossene Umgebung ein Tunnel ist und die Vorzugsachsen quer zum Tunnel versetzt sind.

12. Übertragungs-Vorrichtung mit einem Sender (1) und einem Empfänger (2), zur Übertragung eines Videosignales in abgeschlossener Umgebung, das von einer Folge von Videobild-Zeilensignalen gebildet wird, welche mit einem Synchronisationssignal (SS) bekannter Form und Periodizität beginnen, das einer bekannten Frequenz zur Zeilensynchronisation entspricht, **dadurch gekennzeichnet**, daß der Sender einen Ultrahochfrequenz-Oszillator (22), der ein Trägersignal erzeugt und dem an einem Eingang das Videosignal als Frequenzmodulations-Signal zugeleitet wird, einen Ultrahochfrequenz-Verstärker (23), der an den Ausgang dieses Oszillators angeschlossen ist, und eine Sendeantenne (10) aufweist, die an den Ausgang dieses Ultrahochfrequenz-Verstärkers angeschlossen ist, und daß der Empfänger (2) zwei Empfangsantennen (11, 12) mit Strahlungscharakteristika, die winklig versetzte Vorzugsachsen zulassen, zwei an den Ausgang dieser Antennen angeschlossene Demodulationsstrecken (A, B) und eine Verarbeitungsstufe (III) aufweist, die eine Gültigkeitsstufe (41, 41′), einen Analyse-Schaltkreis (42) und einen steuerbaren Schaltkreis zur Aussonderung der Synchronisationssignale und zur Umschaltung der Strecken (40) umfaßt, wobei dieser Schaltkreis dazu dient, am Ausgang das von der einen oder der anderen der Strecken kommende, demodulierte Signal zu liefern, wobei die Gültigkeitsstufe bei den von den zwei Strecken kommenden Signalen testen soll, ob ein Signal mit der bekannten Frequenz zur Zeilensynchronisation vorliegt, und dem Analyse-Schaltkreis anzeigen soll, ob dieses Signal vorhanden ist oder nicht, wobei ferner der Analyse-Schaltkreis die Strecke mit besserem Empfang bestimmt und das Umschalten durch den steuerbaren Schaltkreis zur Aussonderung der Synchronisationssignale und zur Umschaltung der Strecken so steuert, daß die bessere Strecke ausgewählt wird.

13. Vorrichtung nach Anspruch 12, dadurch gekennzeichnet, daß die Gültigkeitsstufe für jede Strecke einen Gültigkeits-Schaltkreis aufweist.

14. Vorrichtung nach Anspruch 12, dadurch gekannzeichnet, daß die Gültigkeitsstufe testen soll, ob ein Signal mit einer bekannten Frequenz zur Halbbild-Synchronisation vorhanden ist, und daß der Analyse-Schaltkreis eine Streckenumschaltung zum Zeitpunkt der Halbbild-Synchronisation oder zum Zeitpunkt einer Zeilen-Synchronisation entsprechend dem Wunsch des Anwenders steuert.

15. Vorrichtung nach einem der Ansprüche 12 bis 14, dadurch gekennzeichnet, daß der Analyse-Schaltkreis nur dann eine Streckenumschaltung auslöst, wenn die andere Strecke besser ist als die zum betreffenden Zeitpunkt gewählte Strecke, und daß er im Falle einer Umschaltsteuerung zum Zeitpunkt der Halbbild-Synchronisation sowie im Falle einer Steuerung zum Zeitpunkt einer Zeilen-Synchronisation keine Streckenumschaltung durchführt, wenn beide Strecken zum gleichen Zeitpunkt gut oder wenn sie alle beide zum selben Zeitpunkt schlecht sind.

16. Vorrichtung nach Anspruch 12, dadurch gekennzeichnet, daß der Schaltkreis zur Aussonderung der Synchronisationssignale und zur Umschaltung (40) nur eine der zwei Strecken testet, wobei bei der Messung mit auf dieser Strecke vorhandenen Synchronisationssignalen das entsprechende Signal der Einrichtung zum Bildaufbau zugeleitet wird und bei der Messung mit auf dieser Strecke fehlenden Synchronisationssignalen der Umschalter (47) die andere Strecke wählt, die bei Vorliegen von Synchronisationssignalen mit der Einrichtung zum Bildaufbau verbunden wird, während im entgegengesetzten Fall der Umschalter (47) auf die vorherige Strecke zurückschaltet.

17. Vorrichtung nach einem der Ansprüche 12 bis 16, dadurch gekennzeichnet, daß der Ultrahochfrequenz-Oszillator (22) eine Frequenz aufweist, die im Bereich von 1 bis 30 GHz gewählt ist.

18. Vorrichtung nach Anspruch 17, dadurch gekennzeichnet, daß der Ultrahochfrequenz-Oszillator (22) eine Frequenz von etwa 2,5 GHz besitzt.

19. Vorrichtung nach einem der Ansprüche 12 bis 18, dadurch gekennzeichnet, daß die Empfangsantennen (11, 12) identische, beschichtete, elektrische Antennen sind, die linear polarisiert und in Ebenen angeordnet sind, die zueinander in einem Winkel versetzt liegen.

## Claims

1. Method of transmitting a video signal in a confined space between mobile or fixed send or receive areas, said video signal being formed of a succession of video picture line signals beginning with a known format synchronisation signal of known period corresponding to a known line synchronisation frequency, characterised in that in the send area (1) the video signal is used to modulate a microwave carrier signal, this modulated carrier signal is sent (10) in the form of a microwave beam to the receive area (2), in this receive area two signals (S2, S2′) are received on two angularly offset principal axes, each of these receive signals is frequency demodulated by two identical processing channels (A, B), the demodulated receive signal (S9) from a predetermined one of the two channels called the initial channel is applied (47) to picture forming equipment initially and for as long as the presence of a periodic signal at a frequency equal to the video line synchronisation frequency is detected (45, 41, 42) in this demodulated receive signal from this channel, the channel being changed (S12) if this periodic signal disappears in one channel but is detected on the other channel, and so on.

2. Method according to claim 1 characterised in that if at any time no periodic signal at a frequency equal to the video line synchronisation frequency is detected in the signal applied to the picture forming equipment or in the other signal the same signal applied until this time continues to be applied.

3. Method according to claim 1 characterised in that if at any given time at least one periodic signal at a frequency equal to the synchronisation frequency is detected in one of the demodulated received signals the channel on which reception is better is applied to the picture forming equipment.

4. Method according to claim 3 characterised in that switching to the better channel is commanded at the time of receiving in the detection area the first subsequent line synchronisation frequency periodic signal or the first subsequent frame synchronisation frequency periodic signal.

5. Method according to claim 1 characterised in that if at any given time no periodic signal at a frequency equal to the synchronisation frequency is detected in either of the demodulated received signals the signal from the initial channel is applied to the picture forming equipment.

6. Method according to any one of claims 1 to 5 characterised in that the carrier signal frequency is between 1 GHz and 30 GHz.

7. Method according to claim 6 characterised in that the carrier signal frequency is approximately 2.5 GHz.

8. Method according to any one of claims 1 to 7 characterised in that, said confined space being a tunnel (3) along an axis, the signals from the send area (1) are picked up in the receive area (2), the signals having a linear polarisation parallel to this axis or a circular polarisation about this axis.

9. Method according to any one of claims 1 to 8 characterised in that the fixed or variable angular offset between the axes is between 15° and 45°.

10. Method according to claim 9 characterised in that this offset is approximately 20°.

11. Method according to any one of claims 1 to 10 characterised in that, the confined space being a tunnel, the principal axes are offset transversely to the tunnel.

12. Transmission device including a sender (1) and a receiver (2) adapted for transmission in a confined space (3) of a video signal formed by a succession of video picture line signals starting with a known format synchronisation signal (SS) of known period corresponding to a known line synchronisation frequency, characterised in that the sender includes a microwave oscillator (22) generating a carrier signal and to an input of which the video signal is applied as a frequency modulation signal, a microwave amplifier (23) connected to the output of the oscillator and a send antenna (10) connected to the output of this microwave amplifier, and in that the receiver (2) includes two receive antennas (11, 12) having radiation diagrams with angularly offset axes, two demodulation channels (A, B) connected to the output of these antennas, and a processor stage (III) including a validation stage (41, 41′), an analyser circuit (42) and a selective synchronisation signal extraction and channel switching circuit (40) adapted to supply at its output the demodulated signal from one or other of the channels, the validation stage being adapted to test for the presence in the signals from the two channels of a signal at the known line synchronisation frequency and to indicate the presence or the absence of this signal to the analyser circuit which determines the channel on which reception is best and commands switching by the selective synchronisation signal extractor and channel switching circuit to select the better channel.

13. Device according to claim 12 characterised in that the validation stage includes a validation circuit for each channel.

14. Device according to claim 12 characterised in that the validation stage is adapted to test for the presence of a signal at a known frame synchronisation frequency and in that the analyser circuit commands channel switching at the frame synchronisation time or at a line synchronisation time, as selected by the user.

15. Device according to any one of claims 12 to 14 characterised in that, in the case of switching commanded at the frame synchronisation time, the analyser circuit commands channel switching only if the other channel is better than that selected at the time in question, and, in the case of switching commanded at a line synchronisation time, does not switch channels if both channels are good at the same time or if both channels are bad at the same time.

16. Device according to claim 12 characterised in that the synchronisation signal extractor and switching circuit (40) tests only one of the two channels and, if synchronisation signals are present on this channel, the corresponding signal is applied to the picture forming equipment, whereas, if there is no synchronisation signal on this same channel, the switch (47) selects the other channel, which is applied to the picture forming equipment in the presence of synchronisation signals whereas otherwise the switch (47) returns to the previous channel.

17. Device according to any one of claims 12 to 16 characterised in that the microwave oscillator (22) operates at a frequency between 1 GHz and 30 GHz.

18. Device according to claim 17 characterised in that the microwave oscillator operates at a frequency of approximately 2.5 GHz.

19. Device according to any one of claims 12 to 18 characterised in that the receive antennas (11, 12) are identical linear polarisation patch antennas in angularly offset planes.
